# EUROPEAN PATENT APPLICATION

(11) **EP 4 685 596 A1**
(43) Date of publication of application: **28.01.2026**
(21) Application number: 25188414.4
(22) Date of filing: 09.07.2025
(51) Int. Cl.: G05B 23/02, G05D 1/224, G06Q 10/20, G07C 5/00

(54) **DIAGNOSTIC TOOL AND PLATFORM FOR VEHICLE INSPECTION**

(30) Priority: 25.07.2024 IT 202400017380
(71) Applicant: FPT Industrial S.p.A., 10156 Torino (IT)
(72) Inventor: GARGIULO, Massimiliano, 10156 Torino (IT); RICCI, Giulia, 10156 Torino (IT); HASANY, Aamir, 10156 Torino (IT)
(74) Representative: Fiume, Orazio

(57) **Abstract**

Diagnostic tool for a vehicle or engine inspection, comprising a portable device (FD), to be associated to a field technician, and at least a service tools (T1 - T4), such as an infrared camera, an endoscope camera, a microscope camera, a multimeter, a thermal camera, etc..., in data communication with the portable device, the portable device being equipped of a software application configured to partition the desktop in such a way to display at least two medias and disclosing a button for manually or automatically capture a time-sequence of medias, such as pictures and/or videos, during a maintenance intervention and configured to automatically generate a multimedia document embedding said sequence of medias and configured to permit textually commenting and editing the multimedia document previously generated, by means of a human/machine interface

## Description

### Field of the invention

The present invention relates to a diagnostic tool for vehicle inspection or maintenance, in particular in the field of industrial, construction and agricultural vehicle.

### Description of the prior art

The maintenance of nowadays vehicles is based on diagnostic tools configured to communicate with a vehicle control unit and/or an engine control unit or a Battery module controller.

However, the diagnostic tools are often not enough to discovery the cause of a malfunction. Sometimes, the diagnostic tool can suggest the replacement of a component, which probably causes the failure, but it could be not enough.

Often, a fast resolution of a failure is based on the knowledge and experience of the technician involved in the maintenance and repair operation.

Another problem is the data collection which often is just a note-taking that is a manual process as well as the subsequent data filling into a kind of report. This process is time-consuming and eventually leading to an increased vehicle time down at workshop, thus decreasing the efficiency level of the service to customer.

A further problem is due to subjectivity and inconsistency of operations. A human error and the lack of technical experts could impact the result and consistency of field visit.

In any case, after the intervention of the field technician, namely the technician who physically put his/her hands on the vehicle, is called to prepare a technical report, in which he/she has to describe the sequence of the operations carried out on the vehicle until the end of the procedure.

An inconsistent and inefficient intervention leads to an inconsistent report activity.

Sometimes, the diagnostic tools are capable to connect to a remote control room where "remote" technicians offer their support to the "field" ones.

### Summary of the invention

An object of the present invention aims at permitting the digitalization for those best practices that are experienced only in field inspections and are based on the interaction of human beings and tools, which are not embedded on the Engine control module (ECM) or connected to the ECM and other control units (ECU) or data logger on board, including battery controller units.

Another object of the present invention is to provide a tool capable to render quick and easier the reporting activity.

The basic idea of the present invention is a software application running on a portable device, such as a tablet, which permits, on one side, to interface a plurality of service tools and, on the other side, to capture input data from one of the tools ready to be commented in an intervention report also named as "inspection report".

The software application is configured to capture a sequence of media, such as pictures and/or videos, during a maintenance intervention and listed as a sequence in a multimedia document ready to be commented by the field technician.

A multimedia document is a natural extension of a conventional textual document in which at least one picture and/or video and/or audio file is embedded.

According to a preferred embodiment of the invention an error code registered by an onboard control unit of the vehicle is put in relation with the multimedia document.

According to another preferred embodiment of the invention, an artificial intelligence module is trained through the multimedia document in connection with the error code.

The media are captured on request by the field technician or automatically by the software application.

According to a preferred embodiment of the invention, the software application runs on the tablet, which includes
- At least a data interface port, wired and/or wireless, arranged to be connected to a service tool,
- a front camera to capture pictures/videos from the engine/vehicle under maintenance,
- an audio interface to permit intercommunication between a field technician and a remote technician;
- an internet connection.

The service tools include said front camera, an infrared camera, an OBD interface, an endoscope camera, a microscope camera, a multimeter, a thermal camera.

The tablet, as known, includes a display and the software application is programmed to disclose a desktop that can be partitioned to disclose
- field video flow,
- diagnostic data,
- technical documentation, and
- a media shared by a remote technician.

Therefore, according to another aspect, the invention includes a software platform including the software application running on the tablet, a remote software application running on a remote computer associated to a remote technician and a remote data-base arranged to store maintenance books and/or reports previously developed on the same kind of engine/vehicle.

The augmented reality can also be implemented through visors arranged to reproduce a field video flow, for example acquired by means a camera, thermos-camera, and so on and text labels automatically associated by the software application to at least one image of the field video flow.

Thanks to the present invention, starting from an intervention ticket associated to an ID number, various data, including media, are collected, preferably in a time sequence, in a multimedia document, that can be later edited integrating textual comments by the field technician to produce a report of the maintenance intervention.

The field technician can delete those media relating to unsuccessful attempts to solve the failure. Thus, the report becomes itself a best-practice maintenance guide for future interventions and for training an artificial intelligence module.

Therefore, each report relating to the same engine/vehicle, not only defines an intervention history of said engine/vehicle but help to fill a possible gap in the maintenance book of said engine/vehicle.

According to a preferred embodiment of the invention, also the remote technician can control the media capture to define the multimedia document, for example while the field technician has the hands busy, holding a service tool.

These and further objects are achieved by means of the attached claims, which describe preferred embodiments of the invention, forming an integral part of the present description.

### Brief description of the drawings

The invention will become fully clear from the following detailed description, given by way of a mere exemplifying and non limiting example, to be read with reference to the attached drawing figures, wherein:
- Fig. 1 shows a hardware-software architecture of a preferred embodiment of the invention;
- Fig. 2 discloses an example of portable device to be associated to a field technician, disclosing the desktop partition operated by the software application of the invention and
- Fig. 3 discloses a remote computer to be associated to a remote technician.

The same reference numerals and letters in the figures designate the same or functionally equivalent parts.

According to the present invention, the term "second element" does not imply the presence of a "first element", first, second, etc. are used only for improving the clarity of the description and they should not be interpreted in a limiting way.

### Detailed description of the preferred embodiments

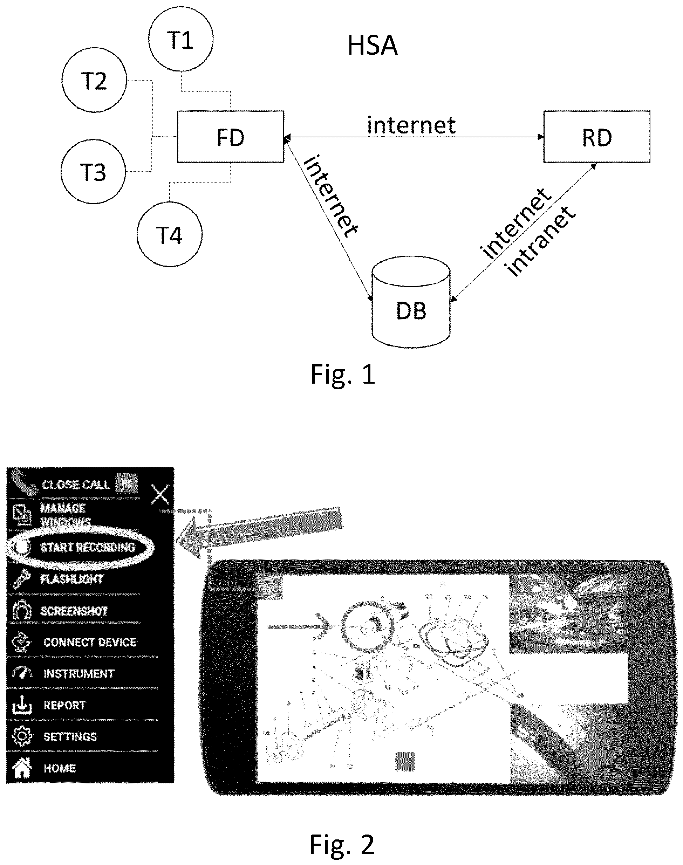

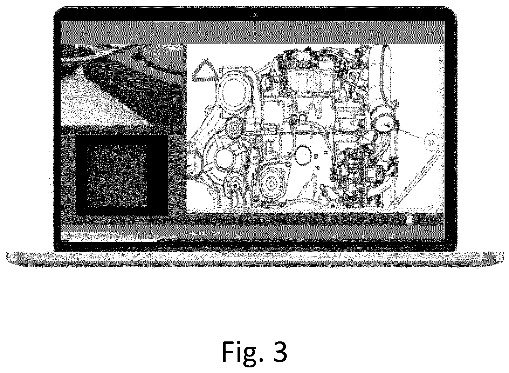

According to the Figs. 1 - 3, the present invention relates to a hardware/software tool and platform HSA.

Figure 2 discloses a portable device FD, such as a smartphone or a tablet, to be associated to a field technician, namely the technician subject to physically visiting a vehicle/engine needing maintenance.

Therefore, the portable device can be named also as "field device".

The portable device is equipped with service tools T1 - T4, such as an infrared camera, an OBD interface, an endoscope camera, a microscope camera, a multimeter, a thermal camera, augmented reality visors, etc...

The portable device is equipped also of a software application configured to partition the desktop in such a way to display at least two of the following media:
- field video flow,
- diagnostic data,
- technical documentation, and
- a media shared by a remote technician.

The field video flow can be generated for example by the front camera of the tablet, the endoscope camera, the microscope camera, or the thermal camera connected to the tablet by means of a USB port or a Bluetooth connection or the like.

The diagnostic data can be values and graphs traced based on data acquisition from a vehicle data network through the so-called OBD socket.

In particular, the present invention proposes a diagnostic tool for a vehicle or engine inspection, comprising said portable device FD, to be associated to a field technician, and at least a service tool (T1 - T4), selected from an infrared camera, an endoscope camera, a microscope camera, a multimeter, a thermal camera, etc..., in data communication with the portable device, the portable device being equipped of a software application
+ configured to partition the desktop in such a way to display at least two of the following medias:
   - field video flow,
   - diagnostic data,
   - technical documentation, and
   - a media shared by a remote technician and
disclosing a virtual button for manually or automatically capture and store medias listed according to a time-sequence, such as pictures and/or videos, during a maintenance intervention and
+ configured to automatically generate a multimedia document embedding said medias according to said time-sequence and
+ configured to permit textually commenting and editing the multimedia document previously generated, by means of a human/machine interface.

The portable device has an internet connection, for example through a GPRS, 3 - 5G connection, to have access to a remote data-base DB containing technical documentation relating each of the engine/vehicle types under maintenance.

Therefore, the field technician, while inspecting the vehicle/engine through one service tool can, on the same display of the tablet examine a schematic drawing of the corresponding portion of the vehicle/engine.

According to a preferred embodiment of the invention, visors can be connected to the tabled such that to replicate the tablet display, permitting the implementation of augmented reality.

The software application running on the tablet is configurable to automatically take screenshots or videos from the desktop to automatically construe a multimedia document listing said medias in the same time-history of acquisition.

According to a preferred embodiment of the invention, the software application includes a guided procedure in order to create a ticket, to associate a vehicle/engine ID to the ticket, in order to automatically sort from the database DB the technical documents relating to the vehicle/engine ID. In addition, the software application permits to search specific topics through the technical documents relating to the vehicle/engine ID.

According to another aspect of the invention, the software application permits to call/video-call a back-office environment where at least a remote technician is placed to receive support by him.

The remote technician can be selected according to the vehicle/engine ID on which the intervention is based.

Therefore, the H/S architecture enables technicians to collaborate with remote experts in real time. This is especially beneficial for complex or challenging problems. In summary, a virtual and remote vehicle inspection system revolutionizes the automotive inspection and maintenance, by providing a comprehensive, efficient, and technologically advanced solution that addresses the limitations of conventional inspection methods. This improves the quality of service, reduces downtime, and fosters increased customer satisfaction and trust. The system can be an asset for automotive inspection and maintenance businesses. It can help to improve the quality of service, reduce costs, and increase customer satisfaction.

As disclosed in figure a remote computer RD is associated to the remote technician.

The remote computer is also equipped with an application software, which is capable to acquire a data stream generated by any of the service tools connected with the portable/field device.

Both the field and remote computer can cooperate in the collection of data from the various source to generate the above inspection report.

Thanks to the present invention, it is possible to collect those missing parts of a perfect scenario: all those items that are not codified to easily identify through sensors or models failures.

Thanks to the present invention, diagnostic data, real pictures/videos, physical measurements, and technical documents are put in relation with the OBD ticket.

All that information can be input to an artificial intelligence module to train it.

One of the most relevant advantages of the invention is that, starting from an error code, not simply a static set of information is obtained but a sequence of operations carried out till the identification of the component needing to be replaced or refurbished.

According to a preferred embodiment of the invention, AR glasses or similar devices provide field technician with a heads-up display, facilitating intuitive and accurate diagnostics. During an inspection, diagnostic data are collected through the connected devices and transmitted in real-time to the field device.

If the field device is in data connection with a remote computer to receive remote assistance, the diagnostic data and video streams are shared with the remote computer.

Due to the front camera of the tablet, or the AR glasses, the remote technician can see what the field technician see. At the same time, the remote technician can speak with the field technician for addressing him toward certain operations or components.

A distinctive feature of the system is its ability to automatically process and organize the collected diagnostic data within the virtual inspection application. This automated process concludes in the generation of comprehensive and structured inspection reports. These reports are presented in a standardized format, eliminating the need for manual data entry, and enhancing efficiency. Field technicians interact with the application to initiate inspections, view real-time data from diagnostic devices, and access generated inspection reports. The interface is designed to accommodate technicians with varying levels of expertise, promoting ease of use and efficiency. The preferred embodiment of the virtual and remote vehicle inspection system offers numerous advantages, including: significant time savings for field technicians, reducing inspection durations; enhanced accuracy and consistency in inspections, reducing the likelihood of missing issues; integrated and specialized tools for faster and secure diagnosis; elimination of manual data entry, reducing the potential for errors; improved customer experience through the delivery of detailed, transparent, and structured inspection reports. As can be seen from Figure 1 the field technician is working on a vehicle with some malfunctions, and since he doesn't find the solution to the problem, he can get in contact with a remote expert simply pressing a virtual button on the desktop of the software application running on the field device.

The back-end, namely the remote technician, through the web platform of the diagnostics platform subject of this invention, can share information with the field technician that is connected with the application installed on mobile devices like smartphone or tablet or on smart glasses. The on-field operator can use diagnostic tools like endoscope, thermal camera, microscope, or others, that are connected to the platform via Wi-fi or Bluetooth, in order to stream the information registered by the tools and to give more details to the back-end that guides the technician in solving the issue on the vehicle.

According to a preferred embodiment of the invention, the software application arranged to run on the portable device is equipped with an artificial intelligence module trained to recognize parts and components of an engine.

Preferably, when the field technician is using the visors he/she sees the engine subject to inspection with labels indicating the names of the components framed with the visors.

Preferably, the software is configured to compile the meta-document by automatically inserting a caption under at least one picture indicating the name of component(s) framed by the picture.

An inspection activity starts from the field technician who, in front of a problem, has to decide if to open a remote connection with the back-end or to try some measurements and tests on its own. Starting from this second case, the field technician can do an analysis and a report using just the external camera. The main advantage of using the diagnostics platform, instead of doing simple photos or videos with the phone/tablet, is that the platform allows to take the pictures and videos and to add them directly into a report, namely a multimedia document, that is automatically generated at the end of the intervention on every type of device, reducing drastically the time needed to realize it. In addition, the field technician can switch on one of the service diagnostic tools that are associated to the software application.

The filed technician can take the photos related to the images shared by the tools and again can decide if to insert them in the report or to simply save them in the media library folder that is visible from any portable device since they are uploaded in the server. At the end, if the technician has added the photos to the report, he/she can download it and use it for internal tracking of the interventions or also as a document for administrative purposes.

When the remote technician is involved in the inspection, he can receive any of the data stream received by the service tool and a video stream of the front camera of the tablet of any other similar device connected to the tablet. According to a preferred embodiment of the invention, software application running on the remote computer, permits to share technical documents or the same pictures previously received by the field device modified by adding arrows, symbols, and any other sign useful to indicate to the field technician what he has to do.

In addition, the remote technician can take photos or videos and save them in a media library or add them to the report.

The field and remote technician can share the same inspection report or produce two independent ones.

At the end of the intervention, both the inspection reports are uploaded to the database and put in relation with the specific engine/vehicle subject to the intervention.

This invention is implemented advantageously in a computer program comprising program code means for performing one or more steps of such method, when such program is run on a computer. For this reason, the patent shall also cover such computer program and the computer-readable medium that comprises a recorded message, such computer-readable medium comprising the program code means for performing one or more steps of such method, when such program is run on a computer.

## Claims

1. Diagnostic tool for a vehicle or engine inspection, comprising a portable device (FD), to be associated to a field technician, and at least a service tool (T1 - T4), selected from an infrared camera, an endoscope camera, a microscope camera, a multimeter, a thermal camera, etc..., in data communication with the portable device, the portable device being equipped of a software application
+ configured to partition the desktop in such a way to display at least two of the following medias:
- field video flow,
- diagnostic data,
- technical documentation, and
- a media shared by a remote technician and
disclosing a virtual button for manually or automatically capture and store medias listed according to a time-sequence, such as pictures and/or videos, during a maintenance intervention and
+ configured to automatically generate a multimedia document embedding said medias according to said time-sequence and
+ configured to permit textually commenting and editing the multimedia document previously generated, by means of a human/machine interface.

2. Diagnostic tool according to claim 1, further comprising a menu arranged to introduce a vehicle or engine type and a unique identification number related to the vehicle or engine subject to inspection and further comprising an OBD interface to acquire an error code from said vehicle and means to associate said error code to said document.

3. Diagnostic tool according to claim 2, further comprising an internet connection and wherein said software application is configured to automatically retrieve of technical documentation relating to said vehicle or engine type.

4. Diagnostic tool according to claim 3, wherein said software application is configured to permit upload on a remote server of said multimedia document after completion.

5. Diagnostic tool according to claim 4, further comprising an augmented reality visor configured to data communicate with the portable device and wherein said software application is configured to share at least a portion of a framed image acquired with the visors with the remote computer.

6. Diagnostic tool according to claim 4 or 5, wherein the software application is provided with an artificial intelligence module trained to recognize an engine component framed by the visors and configured to overlap a label including a name associated to the same component in the image shown in the visors.

7. Diagnostic tool according to any one of the claims 4 - 6, wherein the software application is provided with an artificial intelligence module trained to recognize an engine component framed by the visors and to add a caption under a corresponding picture embedded in the multimedia document.

8. Diagnostic platform comprising the diagnostic tool according to any one of the previous claims 1 - 7, further comprising a data-base (DB) and a remote computer (RD), the latter to be associated to a remote technician, wherein the remote computer is equipped with a remote application software to interface with the application software of the portable device, so as to share a technical document and/or a media file with the portable device.

9. Diagnostic platform according to claim 8, wherein the software application of the portable device is configured to display a remote bidirectional call button to request a bidirectional communication between the portable device and the remote computer.

10. Diagnostic platform according to claim 8 or 9, wherein the software application of the portable device is configured to share with the remote computer a data flow generated by the at least one of the service tool (T1 - T4) .

11. Diagnostic platform according to any one of the claims8 - 10, wherein the remote software application is configured to permit a manipulation of a document or media previously shared by the software application of the portable device and its subsequent sharing with the software application of the portable device.

12. Diagnostic platform according to any one of the claims 8 - 11, wherein the remote software application is configured to automatically generate a multimedia document embedding a further time-sequence of medias manually or automatically acquired and configured to permit textually commenting and editing the multimedia document previously generated, by means of a human/machine interface.

13. Diagnostic platform according to any one of the previous claims 8 - 12, wherein the software application of the portable device and the further software application of the remote computer are configured to upload said multimedia document on a data-base (DB) in relation to a vehicle/engine type and an error code.

14. Method for training an artificial intelligence module comprising the step of acquiring a plurality of said multimedia documents from said data-base according to claim 13, wherein said plurality of multimedia documents share a common error code in order to train said artificial intelligence module, such that the artificial intelligence module is capable to produce an automatic guidance to solve a problem causing said error code.
